# FASCICULE DE BREVET EUROPEEN

(11) **EP 1 610 926 B1**
(45) Date de publication et mention de la délivrance du brevet: **04.10.2006**
(21) Numéro de dépôt: 04717133.5
(22) Date de dépôt: 04.03.2004
(51) Int. Cl.: B23Q 3/00, B23Q 16/00, B25H 1/02, B25B 11/00

(54) **BANC DE PREPARATION D'UNE PIECE DESTINEE A ETRE USINEE SUR UNE MACHINE A COMMANDE NUMERIQUE**
TISCH ZUR VORBEREITUNG EINES WERKSTÜCKS VOR EINER BEARBEITUNG IN EINER NC-MASCHINE
WORKBENCH FOR PREPARING A WORKPIECE TO BE MACHINED ON A DIGITALLY CONTROLLED MACHINE

(30) Priorité: 31.03.2003 FR 0303918
(43) Date de publication de la demande: 04.01.2006
(73) Titulaire: Thibaut, 14500 Vire (FR)
(72) Inventeur: THIBAUT, Jacques, F-14500 Vaudry (FR); THIBAUT, Christophe, F-14500 Vire (FR)
(74) Mandataire: Poupon, Michel
(86) Numéro de dépôt international: PCT/FR2004/000507
(87) Numéro de publication internationale: WO 2004/094103

(56) Documents cités:
- EP-A- 0 646 438
- EP-A- 1 157 778
- US-A- 5 716 045

## Description

La présente invention concerne un banc de préparation d'une pièce destinée à être usinée sur une machine à commande numérique (voir, par exemple, US-5,716,045-A).

Elle se rapporte plus particulièrement à un banc de positionnement des moyens de bridage de ladite pièce sur la machine d'usinage.

Il est connu sur les machines à commandes numériques destinées principalement à l'usinage, par exemple, des plans de cuisine ou de salle de bain, des moyens de bridage d'une pièce qui sont généralement constitués de ventouses à simple ou double-face, pourvues de tuyaux d'alimentation pour leur mise en dépression, positionnées entre le dessous de la pièce à usiner et le dessus de la table de la machine d'usinage, permettant ainsi à la machine d'évoluer sur les quatre côtés et la face supérieure de la pièce à usiner et ce, sans démontage entre les opérations.

Il est également connu actuellement deux principes de positionnement des moyens de bridage de la pièce. Le premier principe consiste en la mise en place, manuellement par l'opérateur, des ventouses munies de leurs tuyaux d'alimentation en suivant les indications de positionnement précisées par la machine numérique, équipée pour ce faire d'un laser fixé dans la broche, ou tout autre moyen comme pige ou jet d'eau, qui est reliée à un logiciel permettant, en fonction des usinages à réaliser, de déterminer la position de chaque ventouse. Un second principe consiste à faire mettre en place les ventouses directement par la machine numérique équipée d'un moyen de préhension automatique, par exemple une pince, montée dans la broche de ladite machine.

Afin d'assurer une bonne qualité de travail, il est nécessaire que la pièce soit parfaitement immobilisée et qu'elle ne bouge pas pendant les différentes opérations d'usinage nécessitant par conséquent la mise en place d'un très grand nombre de ventouses de bridage.

De plus, ces moyens de bridage doivent être positionnés avec précision afin de ne pas être endommagés lors des usinages débouchants (exemple : perçages).

On comprend que lors de la mise en place de cette pluralité de ventouses selon l'un ou l'autre des principes décrits ci-dessus, la machine d'usinage ne produit pas. Cependant, ce temps d'immobilisation de la machine d'usinage est comptabilisé dans le temps de fabrication total de la pièce, entraînant par conséquent une augmentation du prix de revient final de la pièce à usiner.

Le but de l'invention est de proposer un banc de préparation d'une pièce destinée à être usinée sur une machine d'usinage qui permet de résoudre tout ou partie des inconvénients précités.

A cet effet, la présente invention a pour objet un banc de préparation d'une pièce destinée à être usinée sur une machine d'usinage, notamment à commande numérique, caractérisé en ce qu'il est constitué :
- d'un plateau réalisé en granit disposé horizontalement sur un bâti,
- de deux règles de guidage perpendiculaires entre elles dont l'une est mobile par rapport à l'autre, agencées dans un plan parallèle espacé du plan constitué par le plateau supérieur, chacune des règles étant en outre pourvue d'un système de mesure linéaire, et
- d'un moyen de visualisation des coordonnées d'un point sur le plateau apte à être déplacé par un opérateur sur ladite règle mobile.

Suivant quelques dispositions intéressantes de l'invention :
- le banc comporte au moins une rampe de dépression disposée sur le bâti,
- le moyen de visualisation des coordonnées d'un point est constitué d'un laser, par exemple à pile, monté sur un chariot apte à être déplacé au moyen d'une poignée sur la règle mobile,
- le bâti comporte un plateau inférieur, et des roulettes.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue de dessus d'une machine d'usinage équipée d'un banc de préparation selon la présente invention, et

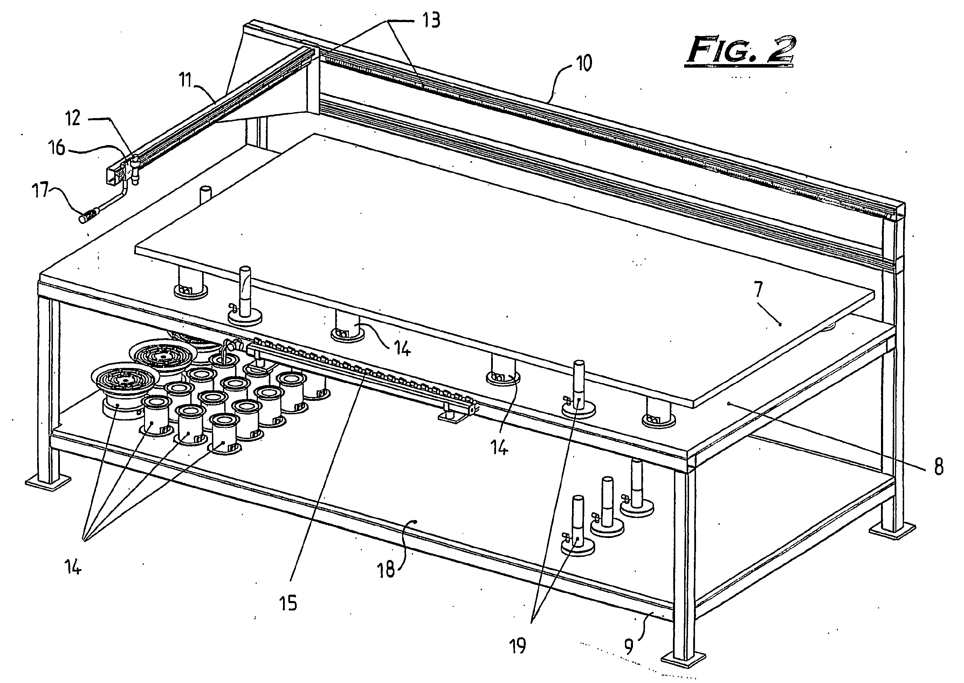

- la figure 2 est une vue en perspective du banc de préparation.

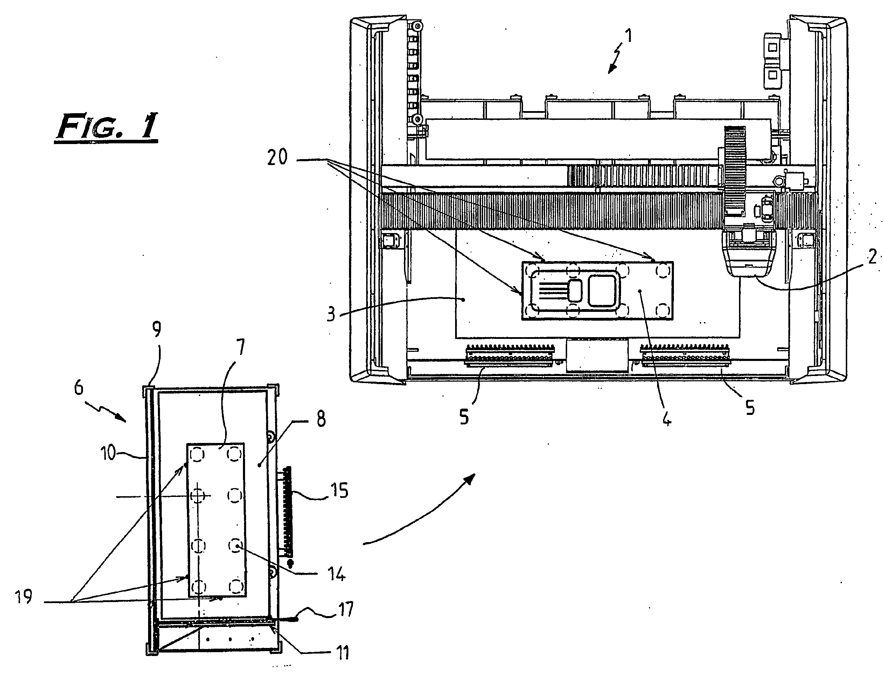

On a représenté à la figure 1 une machine d'usinage 1 à commande numérique pourvue de manière classique d'une broche mobile 2, d'une table d'usinage 3 destinée à recevoir une pièce 4 et de rampes de dépression 5 pour l'immobilisation des moyens de bridage 14 de ladite pièce 4 sur la table 3.

A proximité de ladite machine d'usinage 1 est agencé, selon la présente invention, un banc de préparation 6 permettant à l'opérateur de préparer la prochaine pièce pendant que la machine d'usinage 1 travaille.

Pour ce faire, ce banc de préparation 6 d'une pièce à usiner 7 est constitué d'un plateau 8 réalisé en granit disposé horizontalement sur un bâti 9, de deux règles de guidage 10 et 11 perpendiculaires entre elles dont l'une 11 est mobile par rapport à l'autre 10, agencées dans un plan parallèle espacé du plan constitué par le plateau 8 et d'un moyen de visualisation 12 des coordonnées d'un point sur le plateau 8 apte à être déplacé par un opérateur sur ladite règle mobile 11.

Chacune des règles 10 et 11 est en outre pourvue d'un système de mesure linéaire 13 permettant ainsi d'ajuster le centre de chaque ventouse de bridage 14 à positionner sur le plateau 8 du banc.

Il convient de noter que chaque coordonnée de chacune des ventouses 14 est directement issue d'un logiciel de fabrication assisté par ordinateur en fonction de la forme de la pièce et des usinages à réaliser.

Le bâti 9 du banc de préparation est pourvu également d'au moins une rampe de dépression 15 afin d'assurer, par l'intermédiaire de tuyaux d'alimentation, la dépression de chaque ventouse 14 permettant ainsi d'assurer la liaison des ventouses sur la pièce à usiner, comme explicité plus en détail dans la suite de la description.

Selon un mode de réalisation préférentielle, on notera que le moyen de visualisation 12 des coordonnées d'un point est avantageusement constitué d'un laser, par exemple à pile, monté sur un chariot 16 apte à être déplacé au moyen d'une poignée 17 sur la règle mobile 11.

Cette règle mobile 11 est agencée sur un chariot monté sur la règle fixe 10 assurant ainsi également son déplacement longitudinal sur la règle fixe à l'aide de ladite poignée 17.

On notera que le bâti 9 peut comporter un plateau inférieur 18 afin de permettre le rangement de différentes ventouses 14 ou outils nécessaires à la préparation d'une pièce à usiner.

Le fonctionnement du banc de préparation 6 d'une pièce à usiner ressort déjà de la description qui en a été faite ci-dessus et va être maintenant expliqué en relation avec les figures.

L'opérateur dispose les butées de positionnement 19 de la pièce ainsi que les ventouses 14 sur le plateau 8 du banc de préparation à l'endroit déterminé par le logiciel. Pour cela, il lit les coordonnées de chaque centre des ventouses 14 à positionner et déplace la règle mobile 11 sur la règle fixe 10 ainsi que le laser 12, afin de visualiser ce point sur le plateau 8 et positionner la ventouse 14. Pour éviter tout risque de déplacer les ventouses prépositionnées, l'opérateur peut mettre la dépression entre la face inférieure des ventouses et le dessus du plateau.

Lorsque toutes les ventouses 14 sont positionnées, l'opérateur pose la pièce à usiner 7 en contact sur les trois butées de référence 19 et sur la face supérieure des ventouses 14, puis commande la dépression sur la face supérieure des ventouses 14 au moyen de la rampe de dépression 15 afin de rendre solidaire la pièce à usiner avec les ventouses 14. Dans le cas où l'opérateur a sécurisé la position des ventouses sur le plateau supérieur, alors il doit libérer la dépression entre la face inférieure de la ventouse et le plateau supérieur.

Dès que la machine a terminé un cycle d'usinage, l'opérateur évacue la pièce usinée à l'aide d'un moyen de manutention par exemple un palonnier à ventouse (non représenté) puis se saisit à l'aide du même moyen de manutention de la pièce suivante à usiner équipée des ventouses, afin de la placer sur la table 3 de la machine d'usinage 1 en contact avec les butées de positionnement 20 fixées sur la machine.

L'opérateur commande ensuite la dépression sur la face inférieure des ventouses 14 en reliant chaque tuyau d'alimentation, non représenté, à une rampe de dépression 5 afin de rendre solidaire la pièce à usiner avec la table 3 de la machine.

Un nouveau cycle d'usinage peut alors être lancé pendant que l'opérateur prépare une nouvelle pièce.

On comprend à la lecture de la description ci-dessus que le banc de préparation 6 selon la présente invention, permet de limiter le temps d'arrêt de la machine au temps de déchargement de la pièce usinée et de chargement de la pièce à usiner, toutes les opérations relatives au positionnement du dispositif de bridage étant réalisées en temps masqué.

En outre, ce mode de préparation est plus ergonomique et moins dangereux pour l'opérateur qui n'est pas obligé de monter sur la table pour positionner chaque ventouse (si 10 ventouses sont nécessaires, alors il monte 10 fois sur la table).

Un tel banc permet ainsi, de manière relativement simple à réaliser, de produire d'avantage, diminuant ainsi le temps passé sur chaque pièce et par conséquent, son prix de revient.

Bien que l'invention ait été décrite en liaison avec un mode de réalisation particulier elle comprend tous les équivalents techniques des moyens décrits dans les revendications ci-jointes.

Ainsi, selon une variante de réalisation, le banc de préparation peut être équipé d'un bâti sur roulettes afin de permettre ses déplacements de manière aisée.

De plus, sans sortir du cadre de l'invention :
1/ les moyens de bridage peuvent être différents,
2/ le déplacement du laser peut être motorisé, permettant ainsi le pointage automatique du centre des ventouses.

## Revendications

1. Banc de préparation d'une pièce destinée à être usinée sur une machine d'usinage, notamment à commande numérique, **caractérisé en ce qu'**il est constitué :
- d'un plateau (8) réalisé en granit disposé horizontalement sur un bâti (9),
- de deux règles de guidage (10, 11) perpendiculaires entre elles dont l'une (11) est mobile par rapport à l'autre (10), agencées dans un plan parallèle espacé du plan constitué par le plateau (8), chacune des règles (10, 11) étant en outre pourvue d'un système de mesure linéaire (13), et
- d'un moyen de visualisation (12) des coordonnées d'un point sur le plateau (8) apte à être déplacé par un opérateur sur ladite règle mobile (11).

2. Banc de préparation selon la revendication 1, **caractérisé en ce que** le moyen de visualisation (12) des coordonnées d'un point est constitué d'un laser à pile (12) monté sur un chariot (16) apte à être déplacé au moyen d'une poignée (17) sur la règle mobile (11).

3. Banc de préparation selon l'une quelconque des revendications précédentes, **caractérisé en ce qu'**il comporte au moins une rampe de dépression (15) disposée sur le bâti (8).

## Claims

1. Workbench for preparing a part intended to be manufactured on a manufacturing machine, more especially a digitally controlled manufacturing machine, **characterised in that** said workbench is made up:
- of a plate (8) formed from granite and disposed horizontally on a frame (9),
- of two guide rules (10, 11), which are perpendicular to each other, one (11) of which guide rules is displaceable relative to the other guide rule (10), and are arranged in a parallel plane spaced from the plane formed by the plate (8), each of the rules (10, 11) also being provided with a system of linear measurement (13), and
- of a means (12) for visualising the co-ordinates of a point on the plate (8) capable of being displaced by an operator on said displaceable rule (11).

2. Workbench according to claim 1, **characterised in that** the means 12 for visualising the co-ordinates of a point is made up of a battery laser (12) mounted on a carriage (16) capable of being displaced by means of a handle (17) on the displaceable rule (11).

3. Workbench according to any of the preceding claims, **characterised in that** it includes at least one low-pressure bar (15) disposed on the frame (8).

## Patentansprüche

1. Werkbank zur Herstellung eines Werkstücks, das dazu bestimmt ist, auf einer Bearbeitungsmaschine, insbesondere mit digitaler Steuerung, bearbeitet zu werden, **dadurch gekennzeichnet, dass** sie gebildet ist von:
- einer Platte (8), die aus Granit hergestellt und horizontal auf einem Rahmen (9) angeordnet ist,
- zwei Führungsschienen (10, 11), die zueinander senkrecht sind und von denen eine (11) in Bezug auf die andere (10) beweglich ist und die in einer parallelen Ebene angeordnet sind, die von der Ebene, die von der Platte (8) gebildet ist, beabstandet ist, wobei jede der Schienen (10, 11) ferner mit einem linearen Messsystem (13) versehen ist, und
- einem Anzeigemittel (12) der Koordinaten eines Punktes auf der Platte (8), das von einem Bediener auf der beweglichen Schiene (11) verschoben werden kann.

2. Werkbank nach Anspruch 1, **dadurch gekennzeichnet, dass** das Anzeigemittel (12) der Koordinaten eines Punktes von einem Zellenlaser (12) gebildet ist, der auf einem Wagen (16) montiert ist, der mit Hilfe eines Griffes (17) auf der beweglichen Schiene (11) verschoben werden kann.

3. Werkbank nach einem der vorhergehenden Ansprüche, **dadurch gekennzeichnet, dass** sie mindestens eine Unterdruckrampe (15), die auf dem Rahmen (8) angeordnet ist, umfasst.
